**Europäisches Patentamt**

**European Patent Office**

**Office européen des brevets**

(11) Veröffentlichungsnummer: **0 155 347**
**B1**

(12) **EUROPÄISCHE PATENTSCHRIFT**

(45) Veröffentlichungstag der Patentschrift:
**03.05.89**

(21) Anmeldenummer: **84109225.7**

(22) Anmeldetag: **03.08.84**

(51) Int. Cl.⁴: **B 01 D 29/24,** B 01 D 29/42,
B 01 D 29/38

(54) **Verfahren und Vorrichtung zur Filtration.**

(30) Priorität: **08.08.83 CH 4290/83**

(43) Veröffentlichungstag der Anmeldung:
**25.09.85 Patentblatt 85/39**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**DE-A- 1 461 487**
**FR-A- 1 543 530**
**FR-A- 1 568 110**
**US-A- 2 956 944**

(73) Patentinhaber: **DrM.Dr. Hans Müller AG, Alte**
**Landstrasse 421, CH-8708 Männedorf (CH)**

(72) Erfinder: **Müller, Hans, Dr.-Ing., Im Allmendli,**
**CH-8703 Erlenbach ZH (CH)**

ACTORUM AG

## Beschreibung

Die Erfindung betrifft ein Verfahren zur Filtration eines Restvolumens und zur Auswaschung eines Filterkuchens in einem Druckkerzenfilter, wobei das Restvolumen im unteren Teil eines Filterbehälters mittels einer Pumpe abgesaugt und versprüht wird. Die Erfindung betrifft ferner eine Vorrichtung zur Durchführung des Verfahrens.

Die Restvolumenfiltration in Druckfiltern ist bekannt. In der CH Patentschrift 631 352 wird ein Filterelement in einem Kerzenfilter beschrieben, welches eine Restvolumenfiltration innerhalb des Filterelementes ermöglicht.

Es ist auch bekannt, Sprühdüsen im oberen Bereich zwischen senkrecht angeordneten Filterblättern anzubringen. Die Sprühdüsen sollen den entstandenen Filterkuchen am Ende der Filtration hydraulisch/mechanisch abschwemmen (US-A 2 956 944).

Im Filterbehälter jedoch bleibt unterhalb der Filterelemente unfiltrierte Suspension stehen, welche, wenn sie wertvoll ist, entweder in den Ausgangsbehälter zurückgeführt werden muss oder verlorengeht.

Ein weiterer Nachteil der bekannten Verfahren besteht darin dass zur Auswaschung eines Filterkuchens nach der Filtration relativ grosse Mengen an Waschflüssigkeit erforderlich sind.

Aufgabe der Erfindung ist es, ein Verfahren zur Filtration des Restvolumens sowie zur Auswaschung eines entstandenen Filterkuchens zu schaffen.

Diese Aufgabe wird nach Anspruch 1 durch ein Verfahren gelöst, das dadurch gekennzeichnet ist, dass das Restvolumen mittels eines Injektors im Filterbehälter oberhalb der Filterelemente nebelförmig versprüht wird.

Die Verdüsung des Restvolumens im Filterbehälter hat den Vorteil, dass eine vollständige Ausfiltrierung der im Filterbehälter befindlichen Suspension erfolgt. Die Versprühung bzw. die Verdüsung erfolgt derart, dass ein Flüssigkeitsnebel im Filterbehälter entsteht.

Die Auswaschung eines Filterkuchens erfolgt, gemäss Anspruch 2, in zweckmässiger Weise durch Versprühen einer Waschflüssigkeit, welche aus einem Behälter ausserhalb des Filters zur Verfügung steht.

Es ist vorteilhaft, während des Versprühens der Flüssigkeit, gemäss Anspruch 3, gleichzeitig Luft und/oder ein Gas unter Druck in den Behälter einzuführen. Dabei strömt die Druckluft oder ein anderes Druckgas durch den Filterkuchen hindurch und reisst die verdüsten Flüssigkeitsnebel mit sich. Die Nebel folgen dem Strom der Luft oder des Gases, welche durch den Filterkuchen in Filtrationsrichtung gedrückt werden. Auf dem Filterkuchen erfolgt dann eine Vereinigung der feinen Flüssigkeitsnebel, eine Kondensation, welche dann als Flüssigkeit durch den Filterkuchen gepresst wird. Die in der Flüssigkeit bei der Restvolumenfiltration vorhandenen Feststoffe werden auf dem Filterkuchen abgeschieden; bei Verwendung von Waschflüssigkeit, welche vernebelt wird, tritt so eine Kuchenwaschung auf.

Gemäss Anspruch 4 ist es zweckmässig, Gas mit einem Druck von 2–10 bar zu verwenden, welches den Widerstand des Filterkuchens leicht überwindet.

Es ist gemäss Anspruch 5 vorteilhaft, die Luft oder das Gas entweder vor oder in die Düse zuzuführen, dass eine grosse Strömungsgeschwindigkeit durch das Hilfsgas im Düsenaustritt vorhanden ist. Schon mit relativ geringen Drücken, sowohl für das Gas, als auch für die Flüssigkeit, findet eine feine Aufteilung in Tröpfchen, eine Zerstäubung statt. Es ist eine relativ grosse Menge an Hilfsgas erforderlich.

In einer Varianten wird eine Flüssigkeit unter einem Druck von wenigstens 5 bar durch den Injektor gepresst und, gemäss Anspruch 6, die Luft oder das Gas direkt in den Filterbehälter geleitet. Das Hilfsgas wird entweder unmittelbar am Düsenaustritt zugeleitet oder an einer beliebigen Stelle in den Filterbehälter hinein. Das hat den Vorteil, dass wenig Hilfsgas erforderlich ist, wobei jedoch der zur Verdüsung der Flüssigkeit erforderliche Druck entsprechend hoch sein muss.

Zur Durchführung des Verfahrens ist die Vorrichtung gemäss Patentanspruch 7 vorgesehen.

Das Verfahren soll anhand einer Zeichnung näher beschrieben werden.

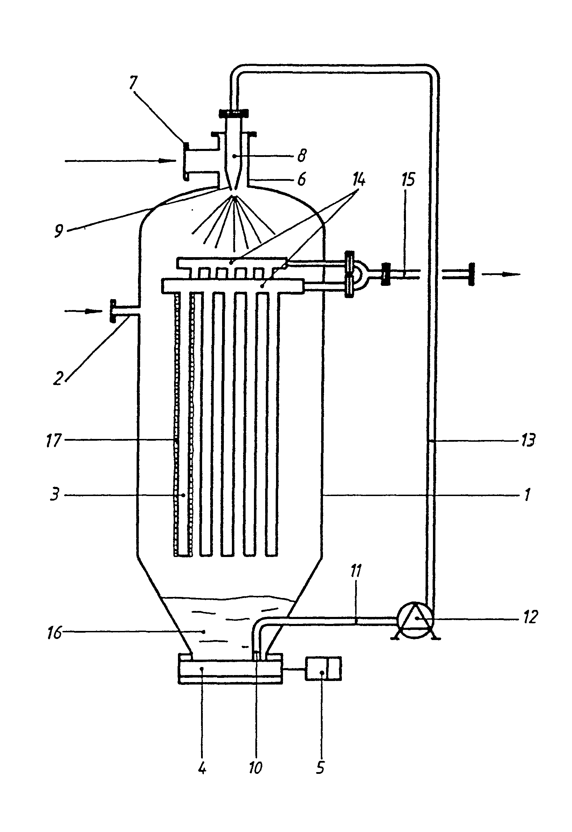

Die einzige Figur zeigt einen nach unten zu konisch zulaufenden Druckbehälter 1. Ein Zulaufstutzen 2 ist im oberen Bereich der Filterelemente 3 angebracht. Ein Schieber 4, der von einem Elektromotor 5 angetrieben wird, ist im unteren Teil des Behälters 1 vorgesehen. Durch den Deckel des Behälters 1 führt ein Rohrteil 6, an welchem seitlich ein Rohr 7 angebracht ist. In den Rohrteil 6 führt ein Injektor 8, welcher aus einem zylindrischen Teil besteht, an dessen Ende eine Düse 9 angebracht ist. Ein senkrechter Rohrteil 10 endet unmittelbar vor dem Schieber 4 und führt über einen Rohrteil 11 auf eine Pumpe 12. Die Druckleitung 13 führt auf den Injektor 8. Die Filterelemente 3 sind an Sammelrohren 14 befestigt. Die Sammelrohre 14 führen durch die Behälterwand hindurch auf eine Abflussleitung 15.

Im Betrieb wird nach beendeter Filtration die Restflüssigkeit 16 über die Pumpe 12 angesaugt und über die Düse 9 oberhalb der Filterelemente 3 verdüst. Der so entstehende Flüssigkeitsnebel tritt durch die Filtergewebe 17 der Filterelemente 3, wobei gleichzeitig Druckluft über das Rohr 7 geführt wird. Die Druckluft oder ein anderes Gas ermöglicht die vollständige Ausfiltration des Restvolumens.

Beispiel

Bei der Filtration von Speiseölen mit Bleicherde ist es aus wirtschaftlichen Gründen erwünscht, die einzelnen Chargen vollständig auszufiltrieren. Das zu bleichende Öl enthält etwa 1% Bleicherde, welche abfiltriert werden muss.

Auf einem Kerzenfilter mit 10 m² Filterfläche werden ca. 20000 Liter Öl mit 1% Bleicherde in den Filterbehälter gepumpt. Das filtrierte Öl verlässt als Filtrat das Filter.

Nach beendeter Filtration wird die Ölzufuhr abgestellt, wobei jedoch der Filterbehälter 1 noch mit Öl gefüllt ist und ein Filterkuchen von ca. 20 mm Dicke auf den Filtergeweben 17 der Filterelemente 3 liegt. Es wird Druckluft von ca. 2 bar durch das Rohr 7 auf den Filterbehälter 1 geführt. Nun wird gleichzeitig die Pumpe 12 in Betrieb gesetzt und das Restvolumen, welches die Bleicherde enthält, über die Druckleitung 13 durch den Injektor 8 gepresst. Der Ölnebel wird von der Druckluft mitgerissen und strömt durch die Filtergewebe 17 der Filterelemente 3. Je tiefer das Niveau im Filterbehälter 1 sinkt, umso mehr Luft und Ölnebel treten durch die Filterelemente 3 hindurch. Auch wenn die Filterkerzen frei von Öl sind, sobald das Niveau unterhalb des unteren Endes derselben abgesunken ist, fliesst immer noch der Ölnebel durch den Filterkuchen, und zwar so lange, bis die Pumpe 12 kein Öl mehr fördert und der Filterbehälter 1 bis zum Schieber 4 entleert ist. Die Restvolumenfiltration dauert, je nach Art und Temperatur des Öls und der Sorte der Bleicherde 15–45 Minuten. Die Entfernung des Filterkuchens erfolgt in bekannter Weise, beispielsweise durch Rückspülen.

Das erfindungsgemässe Verfahren eignet sich nicht nur zur wirtschaftlichen Ausfiltration eines Restvolumens, sondern auch zur wirtschaftlichen Waschung des entstandenen Filterkuchens.

Als Druckfilter haben sich Druckkerzenfilter als geeignet erwiesen, da die Flüssigkeitsnebel von allen Seiten freien Zugang zu den Filtergeweben hängender Filterkerzen haben.

**Patentansprüche**

1. Verfahren zur Filtration eines Restvolumens und zur Auswaschung eines Filterkuchens in einem Druckkerzenfilter, wobei das Restvolumen im unteren Teil eines Filterbehälters mittels einer Pumpe abgesaugt und versprüht wird, dadurch gekennzeichnet, dass das Restvolumen mittels eines Injektors (8) im Filterbehälter (1) oberhalb der Filterelemente (3) nebelförmig versprüht wird.

2. Verfahren nach Anspruch 1, dadurch gekennzeichnet, dass zur Auswaschung des Filterkuchens eine Waschflüssigkeit mittels des Injektors (8) versprüht wird.

3. Verfahren nach den Ansprüchen 1 und 2, dadurch gekennzeichnet, dass während des Versprühens der Flüssigkeit gleichzeitig Luft oder ein Gas unter einem Druck in den Filterbehälter (1) eingeleitet werden.

4. Verfahren nach Anspruch 3, dadurch gekennzeichnet, dass die Luft oder das Gas unter einem Druck von 2 bis 10 bar eingeleitet werden.

5. Verfahren nach den Ansprüchen 3 und 4, dadurch gekennzeichnet, dass die Luft oder das Gas vor oder in die Düse geleitet werden.

6. Verfahren nach den Ansprüchen 3 und 4, dadurch gekennzeichnet, dass die Luft oder das Gas direkt in den Filterbehälter (1) geleitet werden.

7. Druckkerzenfilter mit einer Vorrichtung zur Filtration eines Restvolumens nach den Ansprüchen 1–6, dadurch gekennzeichnet, dass im Raum oberhalb der Filterelemente (3) ein Injektor (8) vorgesehen ist, welcher über eine Druckleitung (13) und eine ausserhalb des Filterbehälters (1) gelagerte Pumpe (12) mit dem Restvolumen (16) in Verbindung steht.

**Claims**

1. A method of filtering a residual volume and of washing out a filter cake in a pressure candle filter, wherein the residual volume is drawn off in the lower section of a filter vessel by means of a pump and sprayed, characterised in that the residual volume is sprayed in nebulized form by means of an injector (8) above the filter elements (3) in the filter vessel (1).

2. A method according to claim 1, characterised in that a washing fluid is sprayed by means of the injector (8) for washing out the filter cake.

3. A method according to claims 1 and 2, characterised in that during the spraying of the fluid air or a gas under pressure is simultaneously introduced into the filter vessel (1).

4. A method according to claim 3, characterised in that the air or gas is fed in under a pressure of 1 to 10 bars.

5. A method according to claims 3 and 4, characterised in that the air or gas is fed in before or into the nozzle.

6. A method according to claims 3 and 4, characterised in that the air or gas is fed directly into the filter vessel (1).

7. A pressure core filter with a device for filtering a residual volume according to claims 1 to 6, characterised in that in the space above the filter elements (3) an injector (8) is provided which is in communication with the residual volume (16) via a pressure conduit (13) and a pump (12) situated outside the filter vessel (1).

**Revendications**

1. Procédé pour la filtration d'un volume résiduel et le lavage d'un gâteau de filtration dans un filtre à bougies de pression, dans lequel le volume résiduel est aspiré à la partie inférieure d'un réservoir de filtration au moyen d'une pompe et pulvérisé, caractérisé en ce que le volume résiduel est pulvérisé en brouillard dans le réservoir de filtration (1), au-dessus des éléments filtrants (3), au moyen d'un injecteur (8).

2. Procédé selon la revendication 1, caractérisé en ce que, pour laver le gâteau de filtration, on pulvérise un liquide de lavage au moyen de l'injecteur (8).

3. Procédé selon les revendications 1 et 2, caractérisé en ce que, pendant la pulvérisation du liquide, on introduit en même temps de l'air ou un gaz sous pression dans le réservoir de filtration (1).

4. Procédé selon la revendication 3, caractérisé en ce que l'air ou le gaz est introduit sous une pression de 2 à 10 bars.

5. Procédé selon les revendications 3 à 4, caractérisé en ce que l'air ou le gaz est introduit en amont de la buse ou dans la buse.

6. Procédé selon les revendications 3 et 4, caractérisé en ce que l'air ou le gaz est introduit directement dans le réservoir de filtration (1).

7. Filtre à bougies de pression équipé d'un dispositif pour la filtration d'un volume résiduel selon les revendications 1 à 6, caractérisé en ce que, dans l'espace situé au-dessus des éléments filtrants (3), est prévu un injecteur (8) qui est en communication avec le volume résiduel (16) par l'intermédiaire d'une conduite de pression (13) et d'une pompe (12) installée à l'extérieur du réservoir de filtration (1).